Europäisches Patentamt

(19) **European Patent Office**

*Office européen des brevets*

(11) Numéro de publication: **0 084 009
B1**

(12) **FASCICULE DE BREVET EUROPEEN**

(45) Date de publication du fascicule du brevet:
09.04.86

(51) Int. Cl.⁴: **E 21 B 17/042,** F 16 L 15/00,
F 16 L 57/00

(21) Numéro de dépôt: 83400040.8

(22) Date de dépôt: 07.01.83

(54) Joint pour tubes, notamment pour tubes pétroliers.

(30) Priorité: 08.01.82 FR 8200171

(43) Date de publication de la demande:
20.07.83 Bulletin 83/29

(45) Mention de la délivrance du brevet:
09.04.86 Bulletin 86/15

(84) Etats contractants désignés:
BE DE FR GB IT NL SE

(56) Documents cités:
FR - A - 1 126 723
FR - A - 1 223 674
FR - A - 1 283 955
FR - A - 2 389 820
US - A - 4 253 687

(73) Titulaire: VALLOUREC Société Anonyme dite., 7, place
du Chancelier Adenauer, F-75116 Paris (FR)

(72) Inventeur: Miffre, Hubert, 1, Allée de Limbourg,
F-78310 Elancourt (FR)

(74) Mandataire: Nony, Michel, Cabinet Nony 29, rue
Cambacérès, F-75008 Paris (FR)

LIBER, STOCKHOLM 1986

## Description

La présente invention concerne un nouveau joint pour tubes, notamment pour tubes pétroliers, du type comportant un élément mâle et un élément femelle rénuis entre eux par des filetages correspondants.

Les joints de cette nature sont notamment utilisés pour réunir les uns aux autres des tubes ou tronçons de tube et réaliser ainsi une longue colonne ou train de tubes. Ces colonnes ou trains de tubes sont utilisés comme tubes de production par exemple dans les trous forés pour l'exploitation pétrolière, les gisements miniers et/ou en géothermie.

Les tubes de production sont généralement introduits dans d'autres tubes dits de cuvelage qui, dans la zone de production, comportent des orifices reliant l'extérieur des tubes de cuvelage à l'espace annulaire ménagé entre les tubes de production et les tubes de cuvelage à la zone de production. On sait que toute exploitation d'un gisement de quelque nature que ce soit, entraîne des particules de terrain qui s'introduisent dans ledit espace annulaire, à travers les orifices précités des tubes de cuvelage. Ces partiales de terrain sont introduites à une vitesse plus ou moins grande dépendant de la pression différentielle régnant entre l'intérieur et l'extérieur du tube de production. Dans certains cas, la pression différentielle peut varier dans un sens ou dans l'autre de façon importante. La vitesse de déplacement des particules peut varier fortement et atteindre des valeurs telles que le tube de production est endommagé et même troué sous l'impact répété des particules solides de terrain qui sont projetées sur lui.

Plusieurs solutions ont été proposées pour augmenter la durée de vie des tubes de production.

Une première solution consiste à augmenter l'épaisseur du tube de production de manière à renforcer le tube de production.

Une seconde solution consiste à recouvrir le tube de production, au niveau du joint, par un manchon de protection.

La seconde solution n'est pas toujours possible à mettre en oeuvre et entraîne non seulement des coûts plus importants mais surtout elle complique considérablement la mise en place des tronçons de tube dans le puits de forage.

C'est pourquoi la préférence est donnée actuellement à la première solution du fait de sa plus grande simplicité de mise en oeuvre.

Toutefois, un inconvénient subsiste. En effet, lorsqu'on assemble par vissage deux éléments l'un dans l'autre, le serrage du joint et l'étanchéité sont obtenus grâce à des portées situées à l'extrémité de l'élément mâle à l'intérieur de l'élément femelle. Il s'ensuit qu'à la partie extérieure du tube, il se trouve des discontinuités au niveau des joints tout le long du tube de production. De telles discontinuités présentent une largeur égale à la différence entre le diamètre externe du tube de production et le diamètre externe du cône fileté mâle.

Par ailleurs, le tube de cuvelage, peut comprendre dans la zone de production, jusqu'à treize orifices par mètre. Comme il est pratiquement impossible de faire en sorte que ces orifices ne soient pas en regard des discontinuités créées au niveau des joints, les particules de terrain introduites à grande vitesse, à travers le tube de cuvelage, peuvent s'introduire également dans les discontinuités ou plus exactement dans l'espace libre entre deux éléments de tube assemblés. Dès lors, il se produit une érosion de la partie filetée mâle dont le diamètre est réduit par rapport au diamètre externe de la partie cylindrique du tube de production. Cette érosion est d'autant plus favorisée que la discontinuité est plus importante. De plus, par cette discontinuité de l'eau et/ou autre fluide sont introduits entre les parties filetées mâle et femelle pour se déposer contre les butées internes, facilitant ainsi la corrosion des filets et de la matière dans le cas de réactions chimiques corrosives.

On connaît déjà d'après le brevet US 4 253 687 un joint pour tube comportant à l'extrémité de l'élément mâle (et non pas de l'élément femelle) un couple de surfaces d'étanchéité tronconique qui comportent un joint torique déformable et qui doivent venir au contact l'une de l'autre lors du vissage, mais cette disposition ne permet pas de protéger le filetage vis-à-vis des projections venant de l'extérieur du tube.

On connaît aussi d'après le brevet français 2 389 820 un joint pour tube comportant au voisinage de l'extrémité de l'élément femelle un couple de surfaces très légèrement coniques et comportant entre elles un joint torique, mais ces surfaces qui servent à obtenir l'étanchéité du joint doivent venir s'appuyer fortement l'une contre l'autre.

La présente invention a pour objet un perfectionnement aux joints pour tubes de plus grande épaisseur qui remédie aux inconvénients rappelés ci-dessus.

Le problème résolu par la présente invention consiste à conserver au tube une épaisseur la plus constante possible au niveau du joint et à protéger l'intérieur du joint des effets de l'érosion et/ou de la corrosion dues aux fluides projettés à partir de l'extérieur du tube.

Le joint selon la présente invention qui résoud ce problème est du type comportant un élément mâle et un élément femelle avec des filetages correspondants, la liaison étanche métal sur métal entre les deux éléments étant réalisée à l'extrémité de l'élément mâle, ce joint étant caractérisé par le fait qu'à son extrémité, l'élément femelle comporte une surface tronconique concave, que l'élément mâle comporte une surface tronconique convexe faisant face à ladite surface tronconique concave et située à une certaine distance de celle-ci, et qu'un organe d'obturation annulaire est interposé entre les deux éléments assemblés au voisinage de l'extrémité de l'élément femelle, pour protéger l'intérieur du joint des effets de l'érosion et/ou de la corrosion.

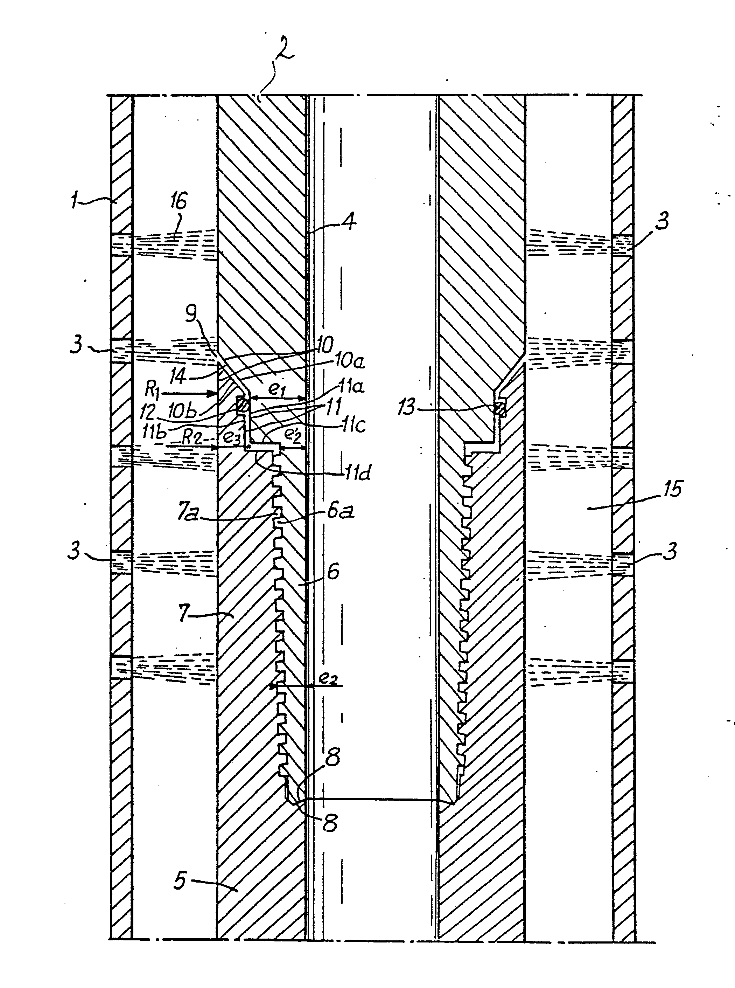

D'autres avantages et caractéristiques ressortiront à la lecture de la description donnée à titre d'exemple non limitatif d'un mode de réalisation de l'invention, ainsi que du dessin annexé dans lequel la figure unique est une coupe verticale partielle et schématique d'un tube de production disposé à l'intérieur d'un tube de cuvelage.

A l'intérieur du tube de cuvelage cylindrique (1) se trouve disposé un tube de production (2). Le tube de cuvelage (1) qui se trouve, dans la zone de production comprend des orifices (3) réalisés in situ par tout moyen approprié connu tel que des charges creuses.

Le tube de production est constitué par des éléments tubulaires (4), (5) reliés les uns aux autres par un joint selon l'invention. Chaque élément (4), (5) comprend à une de ses extrémités un filetage mâle et un filetage femelle. Seules l'extrémité mâle (6) de l'élément de tube supérieur (4) et l'extrémité femelle (7) de l'élément inférieur (5) sont représentées sur la figure. Les extrémités des éléments mâle (6) et femelle (7) sont munies de filetages coniques correspondants (7a) de manière à pouvoir être vissées l'une dans l'autre. Des butées d'étanchéité et de limitation de vissage (8) sont situées à l'extrémité de l'élément mâle et à l'intérieur de l'élément femelle.

L'élément femelle (5) comprend dans la zone (9) de son extrémité, une surface tronconique concave (10b) suivie d'une surface cylindrique (11b) puis d'un épaulement (11d). L'élément mâle (4) comporte en regard des portées correspondantes de l'élément femelle (5) une surface tronconique convexe (10a), une surface cylindrique (11a) et un épaulement (11c). Près de la jonction des surfaces (10b) et (11b) se trouve ménagée sur l'un des éléments mâle ou femelle (4, 5) une gorge (12) sur laquelle est disposé un organe d'obturation annulaire (13). Dans le mode de réalisation représenté la gorge (12) est ménagée dans l'élément femelle (5).

Lorsque les éléments tubulaires (4), (5) sont assemblés, il se forme un canal (14) qui suit le contour des surfaces coniques (10a, 10b) cylindriques (11a, 11b) et de l'épaulement (11c, 11d), qui selon l'invention est interrompu et divisé en deux parties par l'organe d'obturation (13).

Lorsque des particules de terrain débouchent à grande vitesse, sous forme de jets (16) par les orifices (3), dans l'espace annulaire (15) ménagé entre le tube de cuvelage (1) et le tube de production (2), certaines d'entre elles qui se trouvent en face de la zone (9) à l'extrémité de l'élément femelle pénètrent dans le canal (14) et tendent à provoquer l'érosion du tube de production.

Toutefois, grâce à l'invention, ces particules de terrain (16) doivent, pour trouer le tube de production (2), éroder la presque totalité de son épaisseur. En effet, en supposant que les particules érodent la pointe de la partie conique (10) dans la région $R_1$, elles auront à franchir la barrière métallique constituée par l'épaisseur $e_1$ du tronçon (4) qui est nettement supériure à l'épaisseur $e_2$ de la partie filetée (6). De même, si des jets de particules (16) érodent le tube de production (2) au niveau de l'épaulement de l'élément femelle, c'est-à-dire dans la région $R_2$ et en supposant qu'un orifice (3) soit en regard de la région $R_2$, les jets (16) devraient pour atteindre l'intérieur du tube de production, traverser successivement l'épaisseur $e_3$ de l'élément femelle (5) puis l'épaisseur $e'_2$ de l'élément mâle (4), l'épaisseur $e'_2$ étant sensiblement égale à l'épaisseur $e_2$ de la partie filetée (6).

Ainsi quelle que soit la zone d'impact des jets de particules (16) l'obstacle à franchir par lesdites particules est pratiquement l'épaisseur totale du tube de production.

De plus, grâce à la présente invention, les particules et autre fluide s'introduisant à l'extrémité externe du canal (14) sont arrêtés par le joint d'obturation (13), ce qui évite un dépôt de particules à l'intérieur du joint.

La partie conique 10 fait, avec l'axe du joint de préférence un angle de 30° qui permet un usinage aisé des parties (4) et (5) et qui offre une résistance maximale à la pénétration des particules de terrain dans le canal (14).

Il est à noter que les éléments de tubes pourvus de joints selon la présente invention peuvent être rénuis aux éléments de tubes classiques comprenant une partie mâle et une partie femelle correspondantes.

## Revendications

1. Joint pour tubes, notamment pour pour tubes pétroliers, du type comportant un élément mâle (4) et un élément femelle (5) avec des filetages (6a, 7a) correspondants, l'étanchéité étant réalisée à l'extrémité de l'élément mâle à l'intérieur de l'élément femelle, caractérisé par le fait qu'au niveau de son extrémité, l'élément femelle comporte une surface tronconique concave (10b), que l'élément mâle comporte une surface tronconique convexe (10a) faisant face à et située à une certaine distance de ladite surface tronconique (10b) concave de l'élément femelle et qu'un organe d'obturation annulaire (12) est interposé entre les deux tubes assemblés au voisinage de l'extrémité de l'élément femelle pour protéger l'intérieur du joint des effets de l'érosion et/ou de la corrosion.

2. Joint selon la revendication 1, caractérisé par le fait que chaque surface tronconique (10a, 10b) est prolongée en direction des filetages (6a, 7a) par au moins une surface cylindrique (11a, 11b).

3. Joint selon l'une des revendications 1 ou 2 caractérisé par le fait que chaque surface tronconique (10a, 10b) est séparée des filetages (6a, 7a) par un épaulement (11c, 11d).

4. Joint selon l'une des revendications 2 ou 3, caractérisé par le fait que chaque surface tronconique (10a, 10b) est prolongée en direction des filetages par une surface cylindrique (11a, 11b).

5. Joint selon l'une quelconque des revendications précédentes, caractérisé par le fait que l'organe d'obturation annulaire (12) est disposé entre les surfaces cylindriques (11a, 11b).

6. Joint selon la revendication 5, caractérisé par le fait que l'organe d'obturation annulaire (12) est disposé dans une gorge annulaire ménagée dans la surface cylindrique (11b) de l'élément femelle.

7. Joint selon l'une quelconque des revendications précédentes, caractérisé par le fait que les surfaces tronconiques (10a, 10b) font un angle d'environ 30° avec l'axe du tube.

## Patentansprüche

1. Rohrverbindung, insbesondere für Ölfeldrohre, bestehend aus einem Bolzenelement (4) und einem Mutterelement (5) mit entsprechenden Gewinden (6a, 7a), wobei die Dichtung am Ende des Bolzenelementes im Innern des Mutterelementes erfolgt, dadurch gekennzeichnet, daß das Mutterelement in seinem Endbereich eine konische hinterschnittene Fläche (10b) und das Bolzenelement eine konische vorspringende Fläche (10a) aufweist, die der konischen hinterschnittenen Fläche (10b) des Mutterelementes mit einem gewissen Abstand gegenüberliegt, und daß ein ringförmiges Verschlußorgan (12) zwischen den beiden zusammengeschraubten Rohrelementen in der Nachbarschaft des Endes des Mutterelementes eingesetzt ist, um das Innere der Verbindung vor Erosion und/oder Korrosion zu schützen.

2. Rohrverbindung nach Anspruch 1, dadurch gekennzeichnet, daß jede konische Fläche (10a, 10b) sich wenigstens über eine zylindrische Fläche (11a, 11b) in Richtung auf die Gewinde (6a, 7a) fortsetzt.

3. Rohrverbindung nach einem der Ansprüche 1 oder 2, dadurch gekennzeichnet, daß jede der konischen Flächen (10a, 10b) durch eine Schulter (11c, 11d) vom zugehörigen Gewinde (6a, 7a) getrennt ist.

4. Rohrverbindung nach einem der Ansprüche 2 oder 3, dadurch gekennzeichnet, daß jede konische Fläche (10a, 10b) sich über eine zylindrische Fläche (11a, 11b) in Richtung auf die Gewinde fortsetzt.

5. Rohrverbindung nach einem der vorhergehenden Ansprüche, dadurch gekennzeichnet, daß das ringförmige Verschlußorgan (12) zwischen den zylindrischen Flächen (11a, 11b) eingesetzt ist.

6. Rohrverbindung nach Anspruch 5, dadurch gekennzeichnet, daß das ringförmige Verschlußorgan (12) in eine ringförmige Nut eingesetzt ist, die in der zylindrischen Fläche (11b) des Mutterelementes vorgesehen ist.

7. Rohrverbindung nach einem der vorhergehenden Ansprüche, dadurch gekennzeichnet, daß die konischen Flächen (10a, 10b) einen Winkel von rund 30° mit der Rohrachse bilden.

## Claims

1. A pipe joint, in particular for oil pipes, of the type comprising a male element (4) and a female element (5) with corresponding threads (6a, 7a), the sealing being achieved at the end of the male element within the interior of the female element, characterized by the fact that in the vicinity of its end the female element comprises a concave frusto-conical surface (10b), in that the male element comprises a convex frusto-conical surface (10a) facing and situated at a given distance from said concave frusto-conical surface (10b) of the female element, and in that an annular blocking element (12) is interposed between the two assembled tubes in the vicinity of the end of the female element for protecting the interior of the joint from the effects of erosion and/or corrosion.

2. A joint according to claim 1, characterized by the fact that each frusto-conical surface (10a, 10b) is extended in the direction of the threads (6a, 7a) by at least one cylindrical surface (11a, 11b).

3. A joint according to either of claims 1 and 2, characterized by the fact that each frusto-conical surface (10a, 10b) is separated from the threads (6a, 7a) by a shoulder (11c, 11d).

4. A joint according to either of claims 2 and 3, characterized by the fact that each frusto-conical surface (10a, 10b) is extended in the direction of its threads by one cylindrical surface (11a, 11b).

5. A joint according to any one of the preceding claims, characterized by the fact that the annular blocking element (12) is disposed between the cylindrical surfaces (11a, 11b).

6. A joint according to claim 5, characterized by the fact that the annular blocking element (12) is disposed in an annular throat provided in the cylindrical surface (11b) of the female element.

7. A joint according to any one of the preceding claims, characterized by the fact that the

**0 084 009**

frusto-conical surfaces (10a, 10b) make an angle of around 30° with the axis of the tube.